# EUROPEAN PATENT SPECIFICATION

(11) **EP 1 909 170 B1**
(45) Date of publication and mention of the grant of the patent: **16.08.2017**
(21) Application number: 07117641.6
(22) Date of filing: 01.10.2007
(51) Int. Cl.: G06F 9/54, G06F 9/44

(54) **Method and system for automatically generating a communication interface**
Verfahren und System zur automatischen Erzeugung einer Kommunikationsschnittstelle
Procédé et système pour générer automatiquement une interface de communication

(30) Priority: 29.09.2006 US 540806
(43) Date of publication of application: 09.04.2008
(73) Proprietor: SAP SE, 69190 Walldorf (DE)
(72) Inventor: Eigemann, Sven-Eric, Sandhausen 69207 (DE); Geiger, Matthias, Mannheim 68199 (DE); Zimmer, Patrick, Walldorf 69190 (DE)
(74) Representative: Richardt Patentanwälte PartG mbB

(56) References cited:
- WO-A-03/032139
- WO-A-2005/081101
- WO-A2-03/005337
- "Struts User's Guide" INTERNET CITATION, [Online] 25 July 2001 (2001-07-25), XP002265497 Retrieved from the Internet: URL:http://web.archive.org/web/20010725170 128/http://www.aoindustries.com /docs/jakarta-struts-1.0-b1/users_guide.ht ml> [retrieved on 2003-12-17]

## Description

### Background information

Services provided by a computing system may include any type of functionality provided by the system and may be implemented at least in part by software applications of the system. Generally speaking, legacy applications exist which have become outdated with respect to the graphical user interface, but which may still implement services which remain useful. For example, the user interface of a legacy application may have become outdated, but the service it implements may still be useful. One approach to using the services of legacy applications includes developing a new application which reuses the services of the legacy application but which updates the graphical user interface.

One problem associated with this approach is that it may be difficult to create the communication interface between the new application and the legacy application. The communication interface between the new application and the legacy application typically includes an interface component of the new application and an interface component of the legacy application. The interface component of the legacy application may include a plurality of separate interfaces, each interface associated with a particular service of the legacy application. Moreover, all or some of the plurality of interfaces of the services of the legacy application may be unique to that service. The interface component of the new application may therefore require a plurality of different interfaces to interface with the plurality of interfaces of the legacy application, or at least an interface component which is capable of correctly interfacing with each of the plurality of interfaces of the plurality of services of the legacy application. Furthermore, there may be a large number of services provided by the legacy application. Therefore, it may be undesirably time-consuming and cumbersome to a developer of the new application to implement the interface component of the new application to accommodate all of the services of the legacy application.

WO 03/005337 A2 discloses a system for generating a user interface comprising an interface item. The system is configured to store a set of data corresponding to the interface item. The set of data comprises data for generating, and controlling the performance of an operation associated with, the interface item. Upon a user interacts with the interface item, the system is configured to perform the action associated with the interface item, without performing any other action corresponding to the user interface.

### Summary of the invention

The present invention provides a method of providing a communication interface for a first application, the first application being adapted for providing a service, the communication interface being adapted for connecting the first application to a second application, the first application comprising a first graphical user interface, the first graphical user interface being adapted for displaying an output provided by the service, wherein the output provided by the service is mapped via the communication interface to a second graphical user interface of the second application, the method comprising the step of retrieving metadata, the metadata describing a set of display elements of the output provided by the service. The method further comprises the step of generating a data container, the data container comprising a set of data fields, wherein each data field of the set of data fields is associated with display element of the set of display elements, wherein the set of data fields are adapted for receiving data elements associated with the service.

The method according to the invention has the advantage, that a well defined communication interface based on specific services provided by the first application is built. The metadata of the existing or old user interface of the first application is thereby used to build the communication interface. The data container comprises a set of data fields, which are individually associated with respective display elements of respective screen outputs generated by providing the service by the first application. In other words, anything what is designated to be displayed on the first graphical user interface of the first application is associated a respective data field in the data container. This means that for exchanging data between the first and second application, said data to be exchanged has only to be filled in the respective associated data fields in the data container. Since with respect to the first application a well defined association of a respective data field of the data container with a respective screen output element exists, writing or reading to or from said data field by the second application provides an automatic assignment of the respective data contained in the data field to respective screen elements of the first graphical user interface of the first application. Therewith, the generation of the communication interface is fully sufficient to connect the second application to the first application with its specific service.

In accordance with an embodiment of the invention, the retrieving of the metadata comprises reading the metadata from a database associated with the service. In an alternative embodiment, the retrieving of the metadata comprises retrieving the metadata from within computer program instructions of the first application. This has the advantage, that in advance any possible display outputs at the first graphical user interface are known by the communication interface, such that a data container can be generated which considers all possibilities of display outputs at the first application in a logical manner. That means that the communication interface is always built up in the same way, the algorithm/method is service independent.

In accordance with an embodiment of the invention, the display elements comprise a screen identifier of the display output provided by the service and/or a table and/or an input field. Thereby, the set of display elements is associated with the service. In other words, this means that any kind of display element whatever it may be has a unique and distinct assignment to a data field in a respective data container.

In order to ease the assignment, in an embodiment of the invention the set of data fields is arranged in a hierarchical structure, wherein each node of the hierarchical structure is associated with the data field of the set of data fields.

In accordance with an embodiment of the invention, the data elements comprise second specific data received from the second application and/or the data elements comprise first specific data received from the first application. Thereby, the second specific data comprise a request for performing the service at the first application and/or the first specific data are received from the first application in response to the request for performing the service. The reason for using data elements is, that specific data received for example from the second application may contain additional control commands which may be for example necessary to operate the second application, which however will not be used for operation of the first application. For this purpose, the data elements only comprise the second specific data (partially). Also, the opposite is possible namely that second specific data may have to be completed by additional control commands or special texts which are necessary in order that they can be used by the first application.

In accordance with an embodiment of the invention, for a communication between the first and the second application the method further comprises receiving the data elements associated with the service from the first or the second application, storing the received data elements in the set of data fields of the data container and providing the stored data elements to the first or the second application. Thereby, preferably each data element is associated with a display element of the set of display elements of the output provided by the service at the first graphical user interface and wherein each data element is stored in the respective data field associated with the same display element. In other words, each data element is stored in a respective data field, which itself is uniquely assigned or associated with a respective display element.

In accordance with an embodiment of the invention, the data elements are received from the first and/or the second application from an execution controller and/or the data elements are provided to the first and/or the second application through the execution controller. This means, that the execution controller is adapted to provide specific data from the first or second application to the communication interface and that the execution controller is further adapted to collect data elements from the communication interface to provide them to the first or the second application, respectively.

In another aspect, the invention relates to a computer program product comprising computer executable instructions adapted to perform the method according to the invention.

In another aspect, the invention relates to a data processing system comprising a conversion tool, the conversion tool being adapted for providing a communication interface for a first application, the first application being adapted for providing a service, the communication interface being adapted for connecting the first application to a second application, the first application comprising a first graphical user interface, the first graphical user interface being adapted for displaying an output provided by the service, wherein the output provided by the service is mapped via the communication interface to a second graphical user interface of the second application, the conversion tool comprising means for retrieving metadata, the metadata describing a set of elements of the output provided by the service and means for generating a data container, the data container comprising a set of data fields, wherein each data field of the set of data fields is associated with an element of the set of elements, wherein the set of data fields are adapted for receiving data associated with the service.

In accordance with an embodiment of the invention, the conversion tool further comprises means for reading the metadata from a database associated with the service, means for retrieving the metadata from within computer program instructions of the first application, means for receiving second specific data from the second application wherein the data comprises the specific data and/or means for receiving first specific data from the first application, wherein the data comprises the first specific data.

Thereby, the second specific data comprise a request for performing the service at the first application and/or the first specific data are received from the first application in response to the request for performing the service.

In accordance with an embodiment of the invention, for a communication between the first and the second application the conversion tool further comprises means for receiving the data elements associated with the service from the first or the second application, means for storing the received data elements in the set of data fields of the data container and means for providing the stored data elements to the first or the second application.

In another aspect, the invention relates to a data processing system, the data processing system comprising a first application, the first application being adapted for providing a service, the service comprising a first graphical user interface, the first graphical user interface being adapted for displaying an output provided by the service. The data processing system further comprises a second application, the second application comprising a second graphical user interface, wherein the output provided by the service is mapped to the second graphical user interface. The data processing system further comprises a conversion tool, wherein the conversion tool is adapted as outlined above, wherein the mapping is performed via the communication interface.

In accordance with an embodiment of the invention, the data processing system further comprises an execution controller, wherein communication between the first and the second application is performed through the execution controller employing the conversion tool.

### Brief description of the drawings

So that features of the present invention can be understood in detail, a description of the invention can be had by reference to embodiments, some of which are illustrated in the appended drawings. It is to be noted, however, that the appended drawings illustrate only particular embodiments and are therefore not to be considered limiting of scope, for the invention may admit to other equally effective embodiments.
- Figure 1: is a schematic diagram depicting one embodiment of a first software architecture.
- Figure 2: is a schematic diagram depicting one embodiment of a second software architecture.
- Figure 3: is a schematic diagram depicting one embodiment of a computing environment.
- Figure 4: is a flow chart depicting a schematic representation of one embodiment of a method.
- Figure 5: is a flow diagram depicting another schematic representation of one embodiment of the method depicted in fig. 4.
- Figure 6: is a schematic diagram depicting one embodiment of communication interfaces of software components of the first and second software architectures.
- Figure 7: is a schematic block diagram of a data processing system according to the invention.
- Figure 8: depicts a hierarchical structure of an arrangement of data fields.
- Figure 9: shows a flowchart of a method of providing a communication interface according to the invention.

### Detailed description

Embodiments are related to automatically generating elements of a communication interface between software components. In one embodiment, a conversion tool automatically generates a data context for a communication interface between a software component being developed and an existing software component.

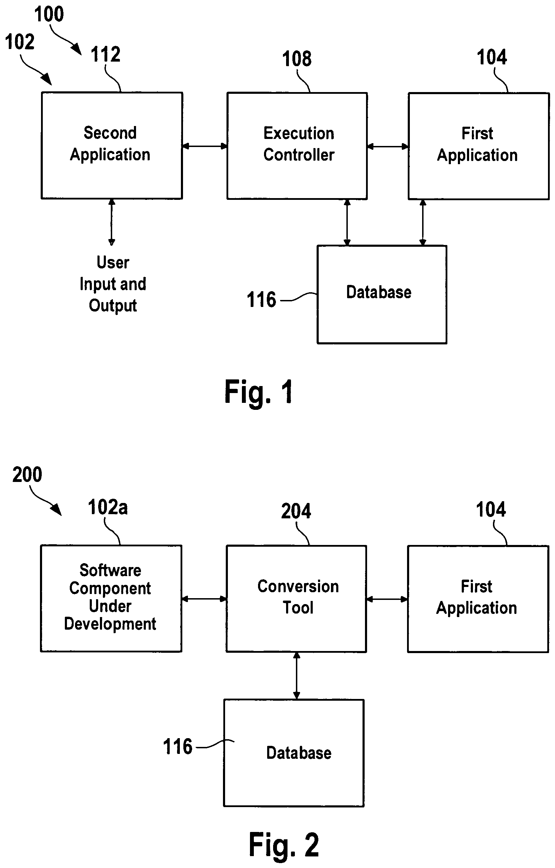

Fig. 1 depicts one embodiment of a first software architecture 100. The depicted exemplary embodiment of the first software architecture 100 comprises a plurality of software components 102, including a first application 104, an execution controller 108, and a second application 112. The first application 104 is capable of performing a service. In one embodiment, the first software architecture 100 includes a database 116, and the performing of the service by the first application 104 includes accessing the database 116. The second application 112 is capable of receiving an input from a user, and communicating with the execution controller 108. The execution controller 108 is capable of communicating with both the first application 104 and the second application 112. In one embodiment, the execution controller 108 is also capable of accessing the database 116. Other embodiments of the first software architecture 100 also exist.

In an exemplary scenario, the first application 104 is a relatively older application, i.e., a legacy application, and the second application 112 is a relatively newer application. For example, the second application 112 can be developed to update some undesirable or outmoded aspect of the first application 104. In one embodiment, the second application 112 provides a user interface that is updated relative to a user interface of the first application 104.

An exemplary use of the first software architecture 100 proceeds as follows. The user provides input to the second application 112, optionally comprising providing input to the graphical user interface of the second application 112. The second application 112 then invokes a service from the first application 104 through the execution controller 108, the service being related to the received user input. The execution controller 108, in response to the invoking of the service by the second application 112, requests the service from the first application 104. As part of the service request, the execution controller provides any data required for the service to the first application 104. The data provided by the execution controller 108 to the first application 104 optionally comprises at least one of: the input data received by the second application 112, or data associated with the input data received by the second application 112. The second application 112 provides the received input data, or the data related to the received input data, to the execution controller 108. The first application 104, in response to the service request by the execution controller 108, performs the requested service, and returns any output data to the execution controller 108. The execution controller 108 then communicates the result of the service, optionally including the output data, to the second application 112. Typically, this results in an updating of the view shown by the graphical user interface of the second application 112.

In one embodiment, the first software architecture 100 depicted in FIG. 1 corresponds to the software architecture described in U.S. Patent Application No. 11/441,463, to Stefan Elfner et al., filed April 25, 2006, entitled "Mapping a New User Interface onto an Existing User Interface". Fig. 2 depicts one embodiment of a second software architecture 200 comprising a software component 102a under development, a conversion tool 204, and the database 116. The software component 102a under development is a particular software component 102 which is being created by a developer. The software component 102a may be in various stages of development, but has not been fully developed. In one embodiment, the software component 102a still lacks a fully developed capability for communicating with at least some other software component 102 for which it is desirable that the software component 102a communicate. In one embodiment, the software component 102a under development comprises at least one of: the execution controller 108 or the second application 112. In one embodiment, the execution controller 108 and the second application 112 can be developed simultaneously, and together be regarded as the software component 102a under development. The conversion tool 204 is capable of interfacing with both the software component 102a and the database 116. In one embodiment, the conversion tool 204 is also capable of interfacing with the first application 104.

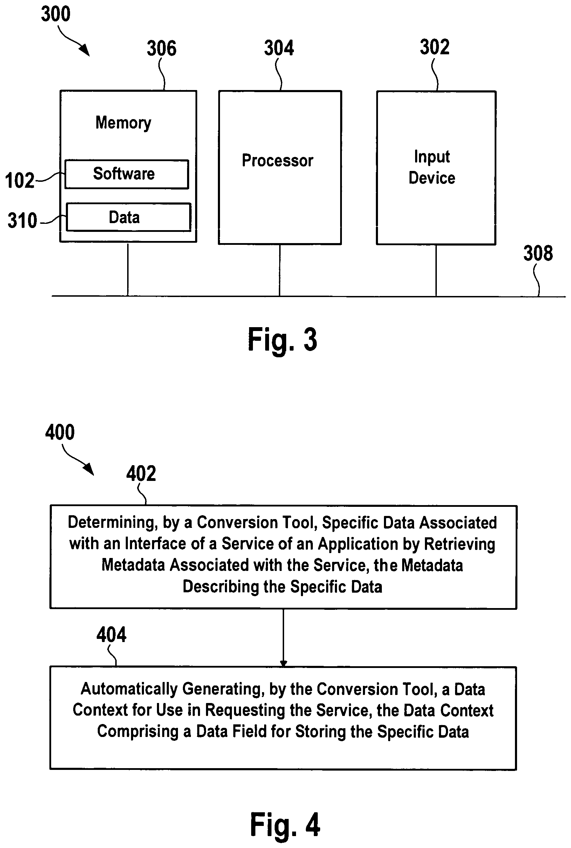

The first and second software architectures 100, 200 depicted in Figs. 1 and 2 run in, and are part of, a computing environment 300, an exemplary embodiment of which is depicted in Fig. 3. The computing environment 300 comprises an input device 302, a processor 304, a memory 306 and a communication line 308. The memory 306 further comprises data 310 and the various software components 102, which are stored in the memory 306 at least at some moment in time. The input device 302 optionally comprises at least one of: a keyboard, a mouse, a voice activated controller, an optical controller, an infrared controller, or other suitable input device. The memory 306 optionally comprises at least one of: a random access memory, a disk storage memory, or other suitable memory. The software components 102 comprise computer program instructions which may be accessed and executed by the processor 304. The software components 102 are implemented in any suitable software language such as, for example, lava, ABAP, C, C++, etc. The data 310 optionally comprises data which is accessible by or integral to the database 116. The memory 306, processor 304 and input device 302 are connected together, and communicate with each other, by means of the communication line 308. In one embodiment, the communication line 308 comprises a system bus, and the computing environment 300 comprises a single computer. In another embodiment, the communication line 308 comprises a network element, and the computing environment 300 comprises a distributed computing environment. In one embodiment in which the computing environment 300 is distributed, the memory 306, processor 304 and input device 302 are optionally distributed across different locations. In one embodiment in which the computing environment 300 is distributed, the computing environment 300 optionally comprises a plurality of some or all of the memory 306, the processor 304 and the input device 302. Other configurations of the computing environment 300 are also possible.

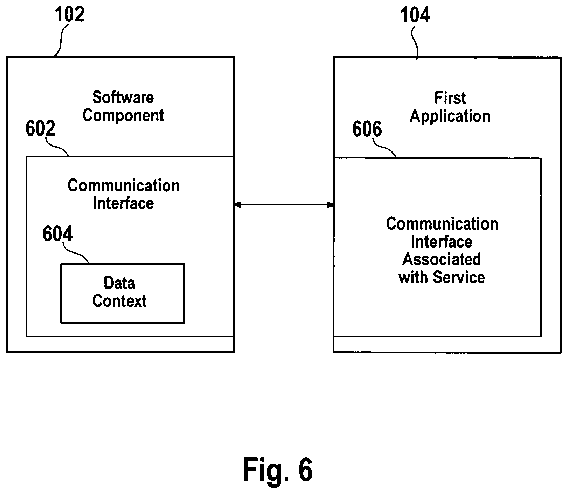

The conversion tool 204 comprises computer program instructions, which when executed by the processor 304, enable the performance of a method 400 (shown in Fig. 4). For example, the computer program instructions of the conversion tool 204 enable the automatic generation of elements of a communication interface between software components 102. In one embodiment, the computer program instructions of the conversion tool 204 enable the automatic generation of a data context 604 (shown in Fig. 6) for a communication interface between the software component 102a being developed and an existing software component 102, e.g., the first application 104. In one embodiment, the conversion tool 204 comprises computer program instructions, which when executed by the processor 304, receive input from a user such as a human operator, and enable the automatic generation of the elements of the communication interface 602 (shown in Fig. 6) including the data context 604. For example, the computer program instructions of the conversion tool 204 optionally provide a human operator with the ability to manage and provide input to the performance of the method 400. In one embodiment, the computer program instructions of the conversion tool 204, in combination with the computer program instructions of some or all of the other software components 102, enable the performance of the method 400. In one embodiment, a computer readable medium comprises the computer program instructions which enable the performance of the method 400. In one embodiment, a system comprises means to perform each of the steps of the method 400. For example, in one embodiment, the means to perform each of the steps of the method 400 comprise elements of the computing environment 300.

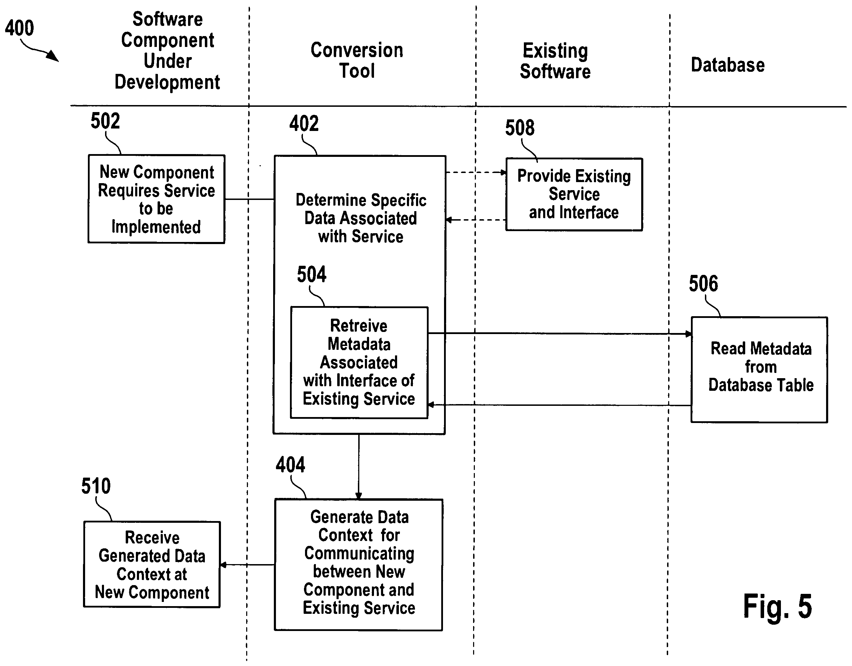

Fig. 4 depicts a schematic representation of one embodiment of the method 400. The method 400 of Fig. 4 is merely one way of carrying out the various embodiments described herein, since variations of the embodiment of the method 400 depicted in Fig. 4 are possible. Additionally, Fig. 5 depicts another schematic representation of one embodiment of the method 400 depicted in Fig. 4. The schematic representation Fig. 5 may be useful to further understand embodiments of the method 400 depicted in Fig. 4, and contains additional visual elements, such as visually organizing the steps of the method 400, as discussed below, according to their correspondence to software components 102 of the first and second software architectures 100, 200. The embodiment of the method 400 depicted in Fig. 5 may overlap parts of the embodiment of the method 400 depicted in Fig. 4, and provide additional steps which are part of the embodiment depicted in Fig. 5.

In one embodiment, as depicted in Fig. 4, the method 400 begins at step 402. At step 402, the conversion tool 204 determines specific data which is associated with the interface 606 (shown in Fig. 6) of the service of the first application 104. Fig. 6 depicts schematically one embodiment of portions of the software component 102 and the first application 104 involved in communication between each other. The service of the first application 104 comprises the communication interface 606 which receives any data required to perform the service, and outputs any data which is the result of the performance of the service. The communication interface 606 is part of the first application 104, and is the particular interface 606 the first application 104 presents in association with a particular service. The first application 104 may have a plurality of different communication interfaces 606 associated with a plurality of different services. In the embodiment depicted in Fig. 6, the software component 102 also comprises a communication interface 602 which is capable of communicating with the communication interface 606 of the service of the first application 104.

In one embodiment, the communication interface 606, associated with the service of the first application 104, comprises a graphical user interface. In one such embodiment in which the communication interface 606 comprises a graphical user interface, the determining of step 402 comprises determining specific data which is associated with the graphical user interface of the communication interface 606.

In the first software architecture 100 depicted in Fig. 1, the communication interface 606 of the service of first application 104 is accessed by the corresponding communication interface 602 of the execution controller 108. In such an embodiment, the communication interface 602 of the execution controller 108 provides any data needed to the communication interface 606 of the service of the first application 104, and receives any data output by the communication interface 606 associated with the service.

In one embodiment, the determining at step 402 determines at least one specific data associated with the service of the first application 104. The term 'specific data' is includes a data variable or data constant that is passed to or received from the communication interface 606 of the service. The specific data may have a value which is variable, as in the case of a data variable, or which is fixed, as in the case of a data constant. A reference to the value of the specific data will include the term 'value'. The term 'specific data' refers to either a single piece of data or a plurality of pieces of data, unless the term is modified in such a way as to specifically refer to the singular or the plural. For example, the term 'at least one specific data' refers to at least one specific piece of data, and the term 'a plurality of specific data' refers to a plurality of specific pieces of data.

The specific data may comprises data of various different data types. In one embodiment, the specific data comprises at least one of the following data types: a character data type, an integer data type, a floating-point number data type, a fixed-point number data type, a boolean data type, a string data type, or an object data type.

In one embodiment, the determining comprises a step 504 of retrieving metadata associated with the service of the first application 104. In one embodiment, at least one metadata is retrieved which provides the identity of the at least one specific data associated with the service. The metadata describes the specific data associated with the interface 606 of the service of the first application 104. The term 'metadata' refers to either a single piece of metadata or a plurality of pieces of metadata, unless the term is modified in such a way as to specifically refer to the singular or the plural. For example, the term 'at least one metadata' refers to at least one piece of metadata, and the term 'a plurality of metadata' refers to a plurality of pieces of metadata.

In one embodiment in which the communication interface 606 comprises a graphical user interface, the retrieving of step 504 comprises retrieving metadata which is associated with the graphical user interface of the communication interface 606 of the service of the first application 104.

In one embodiment, the metadata does not include the specific data itself, and instead is any data that provides an indication as to what the specific data is. In the case in which the metadata does not include the specific data, the metadata may directly describe the specific data associated with the service. For example, the metadata may directly describe the specific data by comprising a name of the specific data. In the case in which the metadata does not include the specific data, the metadata may also indirectly describe the specific data associated with the service. For example, the metadata may provide a clue that is interpreted by the conversion tool 204 to ascertain the identity of the specific data, the interpreting possibly including processing of the metadata by the conversion tool 204.

In one embodiment, the metadata may include portions of the specific data, or exemplary values of the specific data. In such an embodiment, the metadata may include a previous value of the specific data associated with a previous performance of the service. For example, the conversion tool 204 can optionally recognize exemplary values of the specific data and determine the identity of the specific data therefrom.

In one embodiment, the retrieving at step 504 comprises a step 506 of reading the metadata from a table of the database 116. For example, the table is optionally associated with the service in the database 116. In one embodiment, the performance of the service by the first application 104 includes at least one of: communicating with the database 116, reading data from the database 116, writing data to the database 116, or processing data associated with the database 116. The performing of the service may therefore leave clues in the database 116 as to the identity of the specific data required by the communication interface 606 associated with the service, for example in at least one table of the database 116. These clues, i.e. the metadata, can be retrieved by the conversion tool 204 to determine the specific data. In one embodiment, the metadata read from the database table includes at least one of: a key of the table, a primary key of the table, a column heading of the table, or a data element stored in the table. In one embodiment, the retrieving the metadata comprises reading the metadata from a plurality of database tables associated with the service. In one embodiment, the conversion tool 204 retrieves the metadata from a record or log of previous performances of the service. Such a record or log can optionally be part of the a database table of the database 116.

In one embodiment, the retrieving comprises searching the database 116 for the metadata. For example, the service is optionally associated with at least one of: a service name, or a command name of a command of the first application 104 which is part of the service; and in one such embodiment the method 400 comprises searching the database 116 for a specific database table having at least one of: the service name, or the command name.

In one embodiment, the retrieving at step 504 comprises retrieving the metadata from within computer program instructions. For example, the metadata may be embedded within the computer program instructions of the first application 104, and the conversion tool 204 is optionally capable of analyzing the computer program instructions of the first application 104 to locate and retrieve the metadata. The conversion tool 204 may use a search engine or a text parser to locate and retrieve the metadata from within the computer program instructions. The conversion tool 204 is also optionally capable of retrieving the metadata from within software other than the first application 104. For example, another piece of software may be associated with the service of the first application 104, but may have better clues, i.e., more readily accessible metadata, concerning the specific data associated with the interface 606 of the service than the computer program instructions of the first application 104 itself.

In one embodiment, the metadata describes at least one of: a first at least one specific data required by the interface 606 of the service first application 104 when the service is requested, or a second at least one specific data returned by the interface 606 of the service of the first application 104 after the service is performed.

In one embodiment of the method 400, as depicted in Fig. 4, step 404 is performed after step 402. At step 404, the conversion tool 204 automatically generates at least a portion of the communication interface 602 of the software component 102a under development, the portion for use in requesting the service from the first application 104. The automatic generation is based on the determined at least one specific data. In one embodiment, the portion of the communication interface 602 automatically generated for the software component 102a comprises a data context 604. The data context 604 is a data container that holds the values of the specific data determined to be associated with the service. The data context 604 is generated to be part of the software component 102a under development, and is capable of holding values of any specific data that the interface 602 of the software component 102a will need to provide to the interface 606 of the service of the first application 104, when the software component 102 is operated once its development is completed, and any specific data the interface 606 of the service will return to the software component 102 upon completion of the performance of the service.

The automatic generation generates any computer program instructions necessary to create the data context 604 in the software component 102a. In one embodiment, the automatically generating comprises generating the data context 604 as part of at least one of: the execution controller 108 capable of requesting the service from the first application 104, or the second application 112 capable of invoking the service through the execution controller 108. For example, in an embodiment in which the software component 102a under development is the execution controller 108, the automatically generated data context is generated to hold values of the specific data that the communication interface 604 of the execution controller 108 will need to provide to the interface 606 of the service of the first application 104 when the execution controller 108 requests the service from the first application 104. Similarly, the automatically generating can also generate the data context 604 for the second application 112. For example, the second application 112 may require its own data context for invoking the service from the first application 104 through the execution controller 108. In a similar manner to the data context generation for the execution controller 108, the data context 604 generated for the second application 112 holds data values that the second application 112 uses to communicate with the execution controller 108 regarding the service. In one embodiment, the automatically generating generates individual data contexts 604 for both the execution controller 108 and the second application 112.

Fig. 6 depicts the software component 102 comprising the automatically generated data context 604. The communication interface 602 of the software component 102 is capable of providing the data contained in the data context 604 to the communication interface 606 of the first application 104 to request the service from the first application 104.

One advantage of the present invention is that it automatically generates the portion of the communication interface 602, e.g., the data context 604, in the same way for any service, and its associated interface 606, of the first application 104. This is advantageous because the first application 104 may perform a plurality of different services, each potentially having a different interface 606. For example, each interface 606 may be associated with a different number of specific data, each potentially having a different one of a plurality of different data types. Advantageously, the exact number or type of the specific data is not required to be known in advance by the method 400. This may be particularly advantageous for creating communication interfaces 602 for requesting services that are associated with a large number of specific data or for creating communication interfaces 602 for requesting a large number of different services.

In one embodiment, the data context 604 comprises at least one data field for storing the at least one specific data associated with the interface 606 of the service. The data field is capable of holding a value or instance of the specific data described by the metadata. For example, in one embodiment, the data field comprises a data field of the same type as the specific data. The value of the data field is optionally capable of being read from the data context 604 and written to the data context 604.

In one embodiment, the determining of step 402 determines a plurality of specific data associated with the interface 606 of the service, and the automatically generating comprises generating a plurality of data fields of the data context 604, wherein at least one of: the plurality of generated data fields have a one-to-one correspondence with the plurality of specific data; each of the plurality of specific data has a correspondence to at least one of the plurality of generated data fields; or each of a first portion of the plurality of specific data has a correspondence to at least one of the plurality of generated data fields, and none of a second portion of the plurality of specific data corresponds to any of the plurality of generated data fields, the second portion being a non-empty portion.

In one embodiment, the data context 604 comprises a structure which organizes the generated data fields. For example, the data context 604 optionally comprises a hierarchical structure comprising a plurality of nodes, and at least one of the plurality of nodes is associated with the at least one data field. In one embodiment, a plurality of the nodes are associated with a plurality of the automatically generated data fields. The nodes of the hierarchical structure can be used to organize the data within the data context 604. In one embodiment, a plurality of nodes can optionally be separate instances of a particular specific data. For example, if the specific data is a customer order object, a plurality of nodes may represent a plurality of customer orders.

In one embodiment, each node contains data fields which represent at least one of: an individual instance of an object data type, or a table of instances of an object data type. For example, if the specific data is a customer order, a node of the data context 604 may represent an object data type representing a shirt that the customer is ordering. The object data type can have a plurality of characteristics, such as size, color, style, etc. Similarly, a node of the data context may represent a table of instances of the shirt object, for example, in a scenario in which the customer is ordering a plurality of shirts.

In one embodiment, steps 402 and 404 of the method 400 occur during the development of the software component 102a, and not during the operation of the software component 102 once the development of the software component 102 is completed. For example, in one embodiment, the software component 102a under development includes the execution controller 108 and the second application 112, the second application 112 comprising a graphical user interface and being developed to be capable of invoking the service of the first application 104 through the execution controller 108. In one embodiment, the method 400 comprises creating at least a portion of the second application 112 and the execution controller 108, and providing to the conversion tool 204 information related to the second application 112 and the execution controller 108, the information indicating the service the second application 112 is being developed to be capable of invoking. The determining and automatically generating by the conversion tool 204 are then performed during the development of the second application 112 and the execution controller 108, but not during the operation of the second application 112 and the execution controller 108 after the development of the second application 112 and the execution controller 108 is completed. Eventually, the development of the second application 112 and the execution controller 108 is completed, and may be put into operation.

In one embodiment, the method 400 further comprises using the software component 102 once the development is completed. For example, in one embodiment, the method 400 comprises automatically generating the data context 604 such that the data context 604 is capable of being used by the execution controller 108 for communicating data between the first application 104 and the second application 113, and then eventually using the data context 604 by the execution controller 108 for exchanging data with the first application 104 and the second application 112, the first application 104 and the second application 112 writing data to the data context 604 through the execution controller 108, and the first application 104 and the second application 112 reading data from the data context 604 through the execution controller 108. In one embodiment, the method 400 comprises automatically generating the data context 604 such that the data context 604 is capable of being used by the execution controller 108 during a request of the service from the first application 112, and then eventually using the data context 604 by the execution controller 108 for requesting the service from the first application 112, wherein the execution controller 108 provides data stored in the data context 604 to the interface 606 of the service.

In one embodiment, the generated data context 604 is associated with the execution controller 108, and a second data context 604 is associated with the second application 112, wherein the automatically generated data context 604 comprises the hierarchical data storage structure having at least one node associated with the at least one data field, and the second data context 604 comprises a second hierarchical data storage structure having at least one second node associated with the at least one second data field. In one such embodiment, the method 400 further comprises linking the value stored in the at least one data field associated with the at least one node of the generated data context 604 to the valued stored in the at least one second data field associated with the at least one second node of the second data context 604.

The embodiment of the method depicted in Fig. 5 further comprises a step 502 in .which the software component 102a under construction reaches the stage of development at which it requires a service to be implemented. The embodiment of Fig. 5 also includes the optional step 508 of providing the service by the first application 104 to the conversion tool 204 during the development of the second application 112. This may be useful to the conversion tool 204 during the determining of step 402. Additionally, at step 510 the second application 112 receives the generated data context 604.

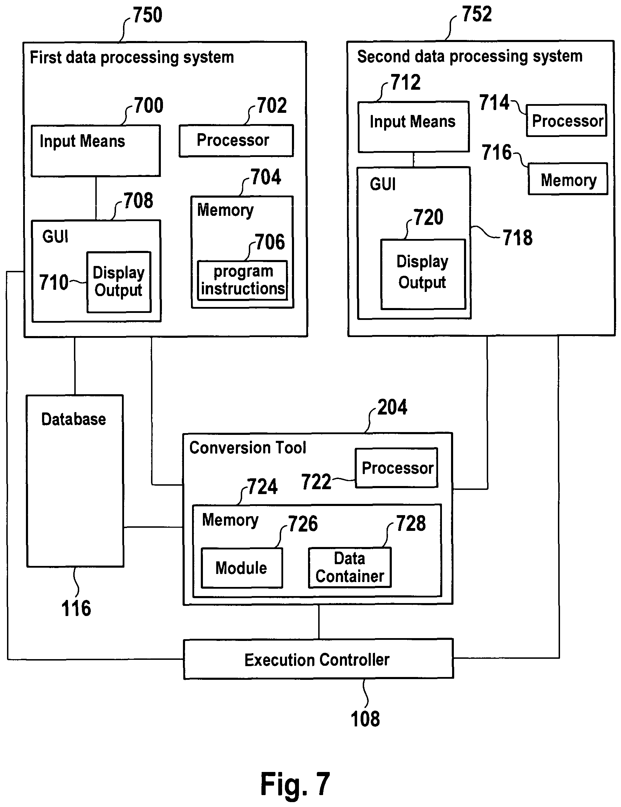

Fig. 7 is a schematic block diagram of a data processing system according to the invention. The data processing system comprises a first data processing system 750 and a second data processing system 752. The first application 104 runs on the first data processing system 750 and the second application 112 runs on the second data processing system 752. Thereby, the first data processing system is for example an application which has an outdated graphical user interface 708 which needs to be substituted by a new and upgraded graphical user interface. This new and graphical user interface is the graphical user interface 718 at the second data processing system.

The first data processing system further comprises input means 700 like for example a keyboard, mouse, haptic input means, input means relating to voice commands etc. The first data processing system further comprises a processor 702 adapted to execute computer executable instructions which may be comprised in a memory 704. For example, the first application 104 is held in the memory 704.

The second data processing system is built up in a similar manner. The second data processing system comprises input means 712 which are also for example a keyboard, mouse, haptic input means, input means relating to voice commands etc. The second data processing system further comprises a processor 714 adapted to execute computer executable instructions which may be comprised in a memory 716 of the second data processing system. For example, the second application 112 is held in the memory 716.

Connected to the first data processing system may be a database 116. However, the database 116 can also be connected to the second data processing system. In order to use a service running at the first application 104 by the second application 112, the display output 710 at a graphical user interface 708 generated by the first application 104 has to be mapped to a display output 720 at the graphical user interface 718 provided by the second application 112. The reason for such a mapping may be for example that the graphical user interface 708 may be for example outdated which means that users will use the new graphical user interface 718 at the second data processing system to provide data or receive data from a service running at the first application 104. Thereby, the graphical user interface 718 compared to the graphical user interface 708 may possess a new design, new functionalities etc.

In order to allow for a communication between the first application 104 and the second application 112, a communication interface has to be provided. Thereby, the communication interface is provided by means of the data container 728, comprised in the memory 724 of the conversion tool 204. The conversion tool 204 further comprises a processor 722. The memory 724 of the conversion tool 204 comprises modules 726 comprising computer executable instructions.

The data container 728 is generated specific for an interaction between the first application 104 and one specific service or transaction. For generating of the data container 728, the conversion tool 204 in a first step reads metadata from the first application 104. Thereby, reading the metadata means that for example the conversion tool 204 uses a special module 726 in order to analyze the program instructions 706 comprised in the memory of the first data processing system. Analysis of said program instructions 706 results in metadata which describe a set of display elements of the display output 710 provided by a specific service of the first application 104. Based on the analysis of the program instructions 706, the data container 728 is generated which comprises a set of data fields, wherein each data field of the set of data fields is associated with a respective display element of the display output 710, wherein the set of data fields are adapted for receiving data elements for example from the second application 112, wherein said data elements are associated with the service running at the first application 104.

After the conversion tool 204 has generated a respective data container 728, the communication interface is generated. As from now, the conversion tool 204 itself is not needed anymore, but the data container 728. By means of the execution controller 108 which accesses the data container 728, all further communication between the first application 104 and the second application 112 is performed. For example the execution controller 108 receives specific data from the second application 112 which were input to the second application 112 by the input means 712. Since the execution controller 108 knows the service which shall be called at the first application 104, the execution controller 108 also knows the communication structure given by the data container 728 to use as interface for communicating the specific data to the first application 104. For this purpose, the execution controller 108 provides the received specific data to the data container 728 where the specific data is stored in specific data fields which were previously associated with respective display elements at the second graphical user interface 718. In response, the execution controller 108 receives from data container 728 in a new data structure specific data, which has been therewith 'translated' by the data container 728 and can be transmitted to the first application 104, where they can be processed.

It has to be mentioned, that either the first application 104 or the second application 112 or the execution controller 108 have access to the database 116. However, this is described in detail in figs. 1 and 2.

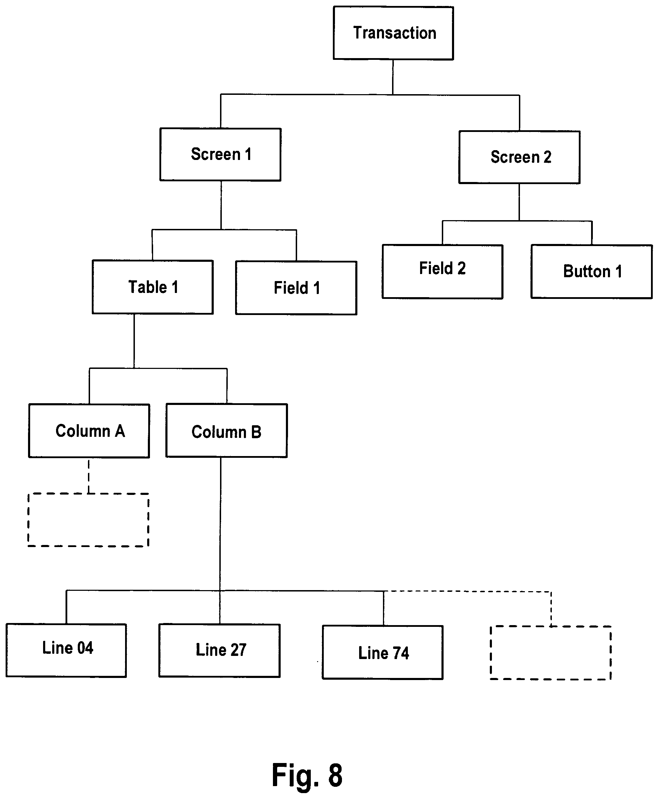

Fig. 8 depicts a hierarchical structure of an arrangement of data fields. Thereby, this is exemplary embodiment how the data fields are organized within the data container 728 of fig. 7. For example, for a given transaction, the computer program instructions of the first application may have been analyzed with respect to said transaction. This resulted in specific metadata, which can be summarized in the hierarchical tree structure as depicted in fig. 8. In the example of fig. 8, the transaction yields an output in form of a screen 1 and a screen 2. The screen 1 comprises two display elements, namely a table 1 and a field 1. The screen 2 comprises also two display elements namely a field 2 and a button 1. Thereby, the fields may be adapted to receive for example a textual input. The button can for example be adapted to be activated in order to confirm or submit the inputs which were made to the field 2.

According to fig. 8, the table 1 comprises a column A and a column B. Thereby, the columns consist of several lines for example line 4, line 27 and line 74. If for example due to the execution of the transaction at the first application, the first application generates in column B, line 27 a data value, this data value is written by the execution controller into the respective data field 'line 27'.

The second application is then able to access the hierarchical structure depicted in fig. 8 and read the specific information which is stored in the field 'line 27'. The reason is that the data field 'line 27' is a unique data field only occurring once in the hierarchical tree structure of fig. 8. Therewith, a well defined association of the specific data written by the first application into the field 'line 27' to a respective field used by the second application can be realized.

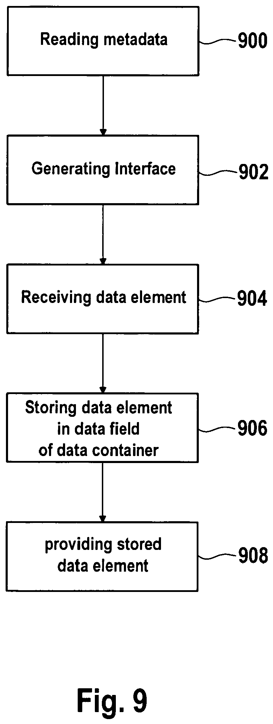

Fig. 9 shows a flowchart of a method of providing a communication interface according to the invention. In step 900, metadata is retrieved by reading the metadata from within for example computer program instructions of an application or from a database. Based on said read metadata, in step 902 an interface is generated in form of a data container. For operating said interface with a first and second application, in step 904 for example a data element is received from the first application. Said data element is written in a respective data field of the data container in step 906. In case the second application uses said respective data field for data processing purposes, the second application does not have to access the first application and request a respective data element but it has only to access the generated data container and access the respective data field which contains the data element. Therewith, in step 908 the storage data element is provided to the second application.
Further embodiments are also possible, which are the result of variously combining steps, elements or embodiments described herein. For example, further embodiments may comprise an altered order of the steps of the method 400 described herein, the result of which may be an embodiment particularly suited to a specific purpose or implementation. In another example, embodiments of the method 400 may include optional steps. Further embodiments, which would be discernable based on the disclosure of the present Application, are also possible.

## Claims

1. A method of providing a communication interface for a first application (104) running on a first data processing system (750), the first application (104) being adapted for providing a service, the first application (104) comprising a first graphical user interface (708), the first graphical user interface (708) being adapted for displaying an output (710) provided by the service, the communication interface being adapted for mapping the output (710) provided by the service to a second graphical user interface (718) of a second application (112) running on a second data processing system (752), the method comprising:
- retrieving metadata, the metadata describing a set of display elements of the output provided by the service,
- generating a data container (728), the data container (728) comprising a set of data fields, wherein each data field of the set of data fields is associated with a display element of the set of display elements, wherein the set of data fields are adapted for receiving data elements associated with the service, wherein the metadata specifies the data field for each of the display elements, wherein the retrieving of the metadata comprises retrieving the metadata from within computer program instructions (706) of the first application (104), wherein the set of display elements is associated with the service, wherein for a communication between the first and the second application (112) the method further comprises
- receiving the data elements associated with the service from the first or the second application (112),
- storing the received data elements in the set of data fields of the data container (728),
- providing the stored data elements to the first or the second application (112), wherein each data element is associated with a display element of the set of display elements of the output provided by the service at the first graphical user interface (708) and wherein each data element is stored in the respective data field associated with the same display element.

2. The method of claim 1, wherein the retrieving of the metadata comprises reading the metadata from a database (116) associated with the service.

3. The method of any of the previous claims, wherein each display element has a unique assignment to a data field comprised in the data container.

4. The method of any of the previous claims, wherein the set of data fields is arranged in a hierarchical structure, wherein each node of the hierarchical structure is representative of a data field of the set of data fields, the metadata comprising identifiers for identifying the nodes for association with the display elements.

5. The method of any of the previous claims, wherein
- the data elements comprise second specific data received from the second application (112) and/or
- the data elements comprise first specific data received from the first application (104).

6. The method of claim 5, wherein
- the second specific data comprise a request for performing the service by the first application (104) and/or
- the first specific data are received from the first application (104) in response to the request for performing the service.

7. The method of any of the previous claims, wherein the data elements are received from the first and/or the second application (112) through an execution controller (108) and/or wherein the data elements are provided to the first and/or the second application (112) through the execution controller (108).

8. A computer program product comprising computer executable instructions adapted to perform, when said instructions are executed on a computer, any of the method steps as claimed in any of the previous claims.

9. A data processing system comprising a conversion tool, the conversion tool being adapted for providing a communication interface for a first application (104) running on a first data processing system (750), the first application (104) being adapted for providing a service, the first application (104) comprising a first graphical user interface (708), the first graphical user interface (708) being adapted for displaying an output (710) provided by the service, the communication interface being adapted for mapping the output (710) provided by the service to a second graphical user interface (718) of a second application (112) running on a second data processing system (752), the data processing system comprising:
- means for retrieving metadata, the metadata describing a set of elements of the output provided by the service,
- means for generating a data container (728), the data container (728) comprising a set of data fields, wherein each data field of the set of data fields is associated with an element of the set of elements, wherein the set of data fields are adapted for receiving data associated with the service, wherein the set of data fields are adapted for receiving data elements associated with the service, wherein the metadata specifies the data field for each of the display elements,
- means for retrieving the metadata from within computer program instructions of the first application (104), wherein the set of display elements is associated with the service, wherein for a communication between the first and the second application (112) the conversion tool further comprises
- means for receiving the data elements associated with the service from the first or the second application (112),
- means for storing the received data elements in the set of data fields of the data container (728),
- means for providing the stored data elements to the first or the second application (112), wherein each data element is associated with a display element of the set of display elements of the output provided by the service at the first graphical user interface (708) and wherein each data element is stored in the respective data field associated with the same display element.

10. The data processing system of claim 9, further comprising means for reading the metadata from a database (116) associated with the service.

11. The data processing system of any of claims 9 to 10, further comprising
- means for receiving second specific data from the second application (112), wherein the data comprises the specific data and/or
- means for receiving first specific data from the first application (104), wherein the data comprises the first specific data.

12. The data processing system of claim 11, wherein
- the second specific data comprise a request for performing the service by the first application (104) and/or
- the first specific data are received from the first application (104) in response to the request for performing the service.

13. The data processing system according to any of claims 9 to 12, further comprising
- a first data processing system (750) with a first application (104) running on the first data processing system, the first application (104) being adapted for providing a service, the first application (104) comprising a first graphical user interface (708), the first graphical user interface (708) being adapted for displaying an output provided by the service,
- a second data processing system (752) with a second application (112) running on the second data processing system, the second application (112) comprising a second graphical user interface (718), wherein the output provided by the service is mapped to the second graphical user interface (718).

14. The data processing system according to claim 13, further comprising an execution controller (108), wherein a communication between the first and the second application (112) is performed through the execution controller (108) employing the conversion tool.

## Patentansprüche

1. Verfahren zum Bereitstellen einer Kommunikationsschnittstelle für eine erste Anwendung (104), die auf einem ersten Datenverarbeitungssystem (750) läuft, wobei die erste Anwendung (104) zum Bereitstellen eines Dienstes ausgeführt ist, die erste Anwendung (104) eine erste grafische Benutzeroberfläche (708) umfasst, die erste grafische Benutzeroberfläche (708) zum Anzeigen einer von dem Dienst bereitgestellten Ausgabe (710) ausgeführt ist, die Kommunikationsschnittstelle zum Abbilden der von dem Dienst bereitgestellten Ausgabe (710) auf eine zweite grafische Benutzeroberfläche (718) einer zweiten Anwendung (112) ausgeführt ist, die auf einem zweiten Datenverarbeitungssystem (752) läuft, wobei das Verfahren Folgendes aufweist:
- Abrufen von Metadaten, wobei die Metadaten einen Anzeigeelementesatz der von dem Dienst bereitgestellten Ausgabe beschreiben,
- Generieren eines Datenbehälters (728), wobei der Datenbehälter (728) einen Datenfeldsatz aufweist, wobei jedes Datenfeld des Datenfeldsatzes einem Anzeigeelement des Anzeigeelementesatzes zugeordnet ist,wobei der Datenfeldsatz zum Empfangen von dem Dienst zugeordneten Datenelementen ausgeführt ist, wobei die Metadaten das Datenfeld für jedes der Anzeigeelemente angeben, wobei das Abrufen der Metadaten das Abrufen der Metadaten aus Computerprogrammanweisungen (706) der ersten Anwendung (104) heraus umfasst, wobei der Anzeigeelementesatz dem Dienst zugeordnet ist, wobei das Verfahren für eine Kommunikation zwischen der ersten und der zweiten Anwendung (112) ferner Folgendes aufweist:
- Empfangen der dem Dienst zugeordneten Datenelemente von der ersten oder der zweiten Anwendung (112),
- Speichern der empfangenen Datenelemente in dem Datenfeldsatz des Datenbehälters (728),
- der ersten oder der zweiten Anwendung (112) Bereitstellen der gespeicherten Datenelemente, wobei jedes Datenelement einem Anzeigeelement des Anzeigeelementesatzes der von dem Dienst bereitgestellten Ausgabe an der ersten grafischen Benutzeroberfläche (708) zugeordnet ist und wobei jedes Datenelement in dem jeweiligen Datenfeld gespeichert wird, das demselben Anzeigeelement zugeordnet ist.

2. Verfahren nach Anspruch 1, wobei das Abrufen der Metadaten das Auslesen der Metadaten aus einer dem Dienst zugeordneten Datenbank (116) umfasst.

3. Verfahren nach einem der vorhergehenden Ansprüche, wobei jedes Anzeigeelement eine eindeutige Zuweisung zu einem in dem Datenbehälter enthaltenen Datenfeld hat.

4. Verfahren nach einem der vorhergehenden Ansprüche, wobei der Datenfeldsatz in einer hierarchischen Struktur angeordnet ist, wobei jeder Knoten der hierarchischen Struktur für ein Datenfeld des Datenfeldsatzes repräsentativ ist, die Metadaten dabei Bezeichner zur Bezeichnung der Knoten zur Zuordnung zu den Anzeigeelementen aufweisen.

5. Verfahren nach einem der vorhergehenden Ansprüche, wobei
- die Datenelemente von der zweiten Anwendung (112) empfangene zweite spezifische Daten umfassen und/oder
- die Datenelemente von der ersten Anwendung (104) empfangene erste spezifische Daten umfassen.

6. Verfahren nach Anspruch 5, wobei
- die zweiten spezifischen Daten eine Anforderung zur Durchführung des Dienstes durch die erste Anwendung (104) umfassen und/oder
- die ersten spezifischen Daten als Reaktion auf die Anforderung zur Durchführung des Dienstes von der ersten Anwendung (104) empfangen werden.

7. Verfahren nach einem der vorhergehenden Ansprüche, wobei die Datenelemente durch einen Ausführungs-Controller (108) von der ersten und/oder der zweiten Anwendung (112) empfangen werden und/oder wobei die Datenelemente der ersten und/oder der zweiten Anwendung (112) durch den Ausführungs-Controller (108) bereitgestellt werden.

8. Computerprogrammprodukt, das computerausführbare Anweisungen aufweist, die dafür ausgeführt sind, einen der Verfahrensschritte nach einem der vorhergehenden Ansprüche durchzuführen, wenn die genannten Anweisungen an einem Computer ausgeführt werden.

9. Datenverarbeitungssystem, das ein Konvertierungswerkzeug aufweist, wobei das Konvertierungswerkzeug zum Bereitstellen einer Kommunikationsschnittstelle für eine erste Anwendung (104), die auf einem ersten Datenverarbeitungssystem (750) läuft, ausgeführt ist, wobei die erste Anwendung (104) zum Bereitstellen eines Dienstes ausgeführt ist, die erste Anwendung (104) eine erste grafische Benutzeroberfläche (708) umfasst, die erste grafische Benutzeroberfläche (708) zum Anzeigen einer von dem Dienst bereitgestellten Ausgabe (710) ausgeführt ist, die Kommunikationsschnittstelle zum Abbilden der von dem Dienst bereitgestellten Ausgabe (710) auf eine zweite grafische Benutzeroberfläche (718) einer zweiten Anwendung (112) ausgeführt ist, die auf einem zweiten Datenverarbeitungssystem (752) läuft, wobei das Datenverarbeitungssystem Folgendes aufweist:
- ein Mittel zum Abrufen von Metadaten, wobei die Metadaten einen Elementesatz der von dem Dienst bereitgestellten Ausgabe beschreiben,
- ein Mittel zum Generieren eines Datenbehälters (728), wobei der Datenbehälter (728) einen Datenfeldsatz aufweist, wobei jedes Datenfeld des Datenfeldsatzes einem Element des Elementesatzes zugeordnet ist, wobei der Datenfeldsatz zum Empfangen von dem Dienst zugeordneten Daten ausgeführt ist, wobei der Datenfeldsatz zum Empfangen von dem Dienst zugeordneten Datenelementen ausgeführt ist, wobei die Metadaten das Datenfeld für jedes der Anzeigeelemente angeben,
- ein Mittel zum Abrufen der Metadaten aus Computerprogrammanweisungen der ersten Anwendung (104) heraus, wobei der Anzeigeelementesatz dem Dienst zugeordnet ist, wobei das Konvertierungswerkzeug für eine Kommunikation zwischen der ersten und der zweiten Anwendung (112) ferner Folgendes aufweist
- ein Mittel zum Empfangen der dem Dienst zugeordneten Datenelemente von der ersten oder der zweiten Anwendung (112),
- ein Mittel zum Speichern der empfangenen Datenelemente in dem Datenfeldsatz des Datenbehälters (728),
- ein Mittel zum Bereitstellen der gespeicherten Datenelemente an die erste oder die zweite Anwendung (112), wobei jedes Datenelement einem Anzeigeelement des Anzeigeelementesatzes der von dem Dienst bereitgestellten Ausgabe an der ersten grafischen Benutzeroberfläche (708) zugeordnet ist und wobei jedes Datenelement in dem jeweiligen Datenfeld gespeichert wird, das demselben Anzeigeelement zugeordnet ist.

10. Datenverarbeitungssystem nach Anspruch 9, das ferner ein Mittel zum Auslesen der Metadaten aus einer dem Dienst zugeordneten Datenbank (116) aufweist.

11. Datenverarbeitungssystem nach einem der Ansprüche 9 bis 10, das ferner Folgendes aufweist
- ein Mittel zum Empfangen zweiter spezifischer Daten von der zweiten Anwendung (112), wobei die Daten die spezifischen Daten umfassen, und/oder
- ein Mittel zum Empfangen erster spezifischer Daten von der ersten Anwendung (104), wobei die Daten die ersten spezifischen Daten umfassen.

12. Datenverarbeitungssystem nach Anspruch 11, wobei
- die zweiten spezifischen Daten eine Anforderung zur Durchführung des Dienstes durch die erste Anwendung (104) umfassen und/oder
- die ersten spezifischen Daten als Reaktion auf die Anforderung zur Durchführung des Dienstes von der ersten Anwendung (104) empfangen werden.

13. Datenverarbeitungssystem nach einem der Ansprüche 9 bis 12, das ferner Folgendes aufweist
- ein erstes Datenverarbeitungssystem (750) mit einer ersten Anwendung (104), die auf dem ersten Datenverarbeitungssystem läuft, wobei die erste Anwendung (104) zum Bereitstellen eines Dienstes ausgeführt ist, die erste Anwendung (104) eine erste grafische Benutzeroberfläche (708) umfasst, die erste grafische Benutzeroberfläche (708) zum Anzeigen einer von dem Dienst bereitgestellten Ausgabe (710) ausgeführt ist,
- ein zweites Datenverarbeitungssystem (752) mit einer zweiten Anwendung (112), die auf dem zweiten Datenverarbeitungssystem läuft, wobei die zweite Anwendung (112) eine zweite grafische Benutzeroberfläche (718) umfasst, wobei die von dem Dienst bereitgestellte Ausgabe auf die zweite grafische Benutzeroberfläche (718) abgebildet wird.

14. Datenverarbeitungssystem nach Anspruch 13, das ferner einen Ausführungs-Controller (108) aufweist, wobei eine Kommunikation zwischen der ersten und der zweiten Anwendung (112) durch den das Konvertierungswerkzeug einsetzenden Ausführungs-Controller (108) durchgeführt wird.

## Revendications

1. Procédé de fourniture d'une interface de communication pour une première application (104) fonctionnant sur un premier système de traitement de données (750), la première application (104) étant adaptée pour fournir un service, la première application (104) comprenant une première interface graphique d'utilisateur (708), la première interface graphique d'utilisateur (708) étant adaptée pour afficher une sortie (710) fournie par le service, l'interface de communication étant adaptée pour le mappage de la sortie (710) fournie par le service vers une seconde interface graphique d'utilisateur (718) d'une seconde application (112) fonctionnant sur un second système de traitement de données (752), le procédé comprenant :
- la récupération de métadonnées, les métadonnées décrivant un ensemble d'éléments d'affichage de la sortie fournie par le service,
- la génération d'un container de données (728), le container de données (728) comprenant un ensemble de champs de données, où chaque champ de données de l'ensemble des champs de données est associé avec un élément d'affichage de l'ensemble des éléments d'affichage,
où l'ensemble des champs de données est adapté pour recevoir des éléments de données associés avec le service, où les métadonnées précisent le champ de données pour chacun des éléments d'affichage, où la récupération des métadonnées comprend la récupération des métadonnées à partir d'instructions de programme informatique (706) de la première application (104), où l'ensemble des éléments d'affichage est associé avec le service, où, pour une communication entre la première et la seconde application (112) le procédé comprend en outre :
- la réception des éléments de données associés avec le service à partir de la première ou de la seconde application (112),
- le stockage des éléments de données reçus dans l'ensemble des champs de données du container de données (728),
- la fourniture des éléments de données stockés à la première ou à la seconde application (112), où chaque élément de données est associé avec un élément d'affichage de l'ensemble des éléments d'affichage de la sortie fournie par le service à la première interface graphique d'utilisateur (708) et où chaque élément de données est stocké dans le champ de données respectif associé avec le même élément d'affichage.

2. Procédé selon la revendication 1, dans lequel la récupération des métadonnées comprend la lecture des métadonnées à partir d'une base de données (116) associée avec le service.

3. Procédé selon l'une quelconque des revendications précédentes, dans lequel chaque élément d'affichage a une affectation unique vis-à-vis d'un champ de données compris dans le container de données.

4. Procédé selon l'une quelconque des revendications précédentes, dans lequel l'ensemble des champs de données est agencé dans une structure hiérarchique, où chaque noeud de la structure hiérarchique est représentatif d'un champ de données de l'ensemble des champs de données, les métadonnées comprenant des identifieurs pour identifier les noeuds pour une association avec les éléments d'affichage.

5. Procédé selon l'une quelconque des revendications précédentes, dans lequel
- les éléments de données comprennent des secondes données spécifiques reçues à partir de la seconde application (112), et/ou
- les éléments de données comprennent des premières données spécifiques reçues à partir de la première application (104).

6. Procédé selon la revendication 5, dans lequel
- les secondes données spécifiques comprennent une demande pour l'exécution du service par la première application (104), et/ou
- les premières données spécifiques sont reçues à partir de la première application (104) en réponse à la demande pour l'exécution du service.

7. Procédé selon l'une quelconque des revendications précédentes, dans lequel les éléments de données sont reçus à partir de la première et/ou de la seconde application (112) par le biais d'un système de contrôle d'exécution (108) et/ou dans lequel les éléments de données sont fournis à la première et/ou à la seconde application (112) par le biais du système de contrôle d'exécution (108).

8. Produit de programme informatique comprenant des instructions exécutables par ordinateur adaptées pour réaliser, lorsque lesdites instructions sont exécutées sur un ordinateur, toutes les étapes du procédé selon l'une quelconque des revendications précédentes.

9. Système de traitement de données comprenant un outil de conversion, l'outil de conversion étant adapté pour fournir une interface de communication pour une première application (104) fonctionnant sur un premier système de traitement de données (750), la première application (104) étant adaptée pour fournir un service, la première application (104) comprenant une première interface graphique d'utilisateur (708, la première interface graphique d'utilisateur (708) étant adaptée pour afficher une sortie (710) fournie par le service, l'interface de communication étant adaptée pour le mappage de la sortie (710) fournie par le service vers une seconde interface graphique d'utilisateur (718) sur une seconde application (112) fonctionnant sur un second système de traitement de données (752), le système de traitement de données comprenant :
- des moyens pour la récupération des métadonnées, les métadonnées décrivant un ensemble d'éléments de la sortie fournie par le service,
- des moyens de génération d'un container de données (728), le container de données (728) comprenant un ensemble de champs de données, où chaque champ de données de l'ensemble des champs de données est adapté pour recevoir des données associées avec le service, où l'ensemble des champs de données est adapté pour recevoir des éléments de données associé avec le service, où les métadonnées précisent le champ de données pour chacun des éléments d'affichage,
- des moyens de récupération des métadonnées à partir d'instructions de programme informatique de la première application (104), où l'ensemble des éléments d'affichage est associé avec le service, où, pour une communication entre la première et la seconde application (112), l'outil de conversion comprend en outre
- des moyens pour recevoir les éléments de données associés avec le service à partir de la première ou de la seconde application (112),
- des moyens de stockage des éléments de données reçus dans l'ensemble des champs de données du container de données (728),
- des moyens pour fournir les éléments de données stockés à la première ou à la seconde application (112), où chaque élément de données est associé avec un élément d'affichage de l'ensemble des éléments d'affichage de la sortie fournis par le service au niveau de la première interface graphique d'utilisateur et où chaque élément de données est stocké dans le champ de données respectif associé avec le même élément d'affichage.

10. Système de traitement de données selon la revendication 9, comprenant en outre des moyens de lecture des métadonnées à partir d'une base de données (116) associée avec le service.

11. Système de traitement de données selon l'une quelconque des revendications 9 à 10, comprenant en outre
- des moyens de réception de secondes données spécifiques à partir de la seconde application (112), où les données comprennent les données spécifiques et/ou
- des moyens de réception de premières données spécifiques à partir de la première application (104), où les données comprennent les premières données spécifiques.

12. Système de traitement de données selon la revendication 11, dans lequel
- les secondes données spécifiques comprennent une demande pour l'exécution du service par la première application (104), et/ou
- les premières données spécifiques sont reçues à partir de la première application (104) en réponse à la demande d'exécution du service.

13. Système de traitement de données selon l'une quelconque des revendications 9 à 12, comprenant en outre
- un premier système de traitement de données (750) avec une première application (104) fonctionnant sur le premier système de traitement de données, la première application (104) étant adaptée pour fournir un service, la première application (104) comprenant une première interface graphique d'utilisateur (708), la première interface graphique d'utilisateur (708) étant adaptée pour afficher une sortie fournie par le service,
- un second système de traitement de données (752) avec une seconde application (112) fonctionnant sur un second système de traitement de données, la seconde application (112) comprenant une seconde interface graphique d'utilisateur (718), où la sortie fournie par le service est mappée vis-à-vis de la seconde interface graphique d'utilisateur (718).

14. Système de traitement de données selon la revendication 13, comprenant en outre un système de contrôle d'exécution (108), où une communication entre la première et la seconde application (112) est effectuée par le biais du système de contrôle d'exécution (108) employant l'outil de conversion.
